# EUROPEAN PATENT APPLICATION

(11) **EP 4 717 561 A1**
(43) Date of publication of application: **01.04.2026**
(21) Application number: 25184676.2
(22) Date of filing: 23.06.2025
(51) Int. Cl.: B62D 21/04, B60P 1/00, B60N 2/00, B60K 1/04, B60N 2/02, B60P 3/42, B62D 63/02, B62D 65/04

(54) **MODULAR CHASSIS FOR A VELOCIPEDE TYPE ELECTRIC POWER ASSISTED CYCLE, EPAC, VEHICLE AND VEHICLE THEREOF**

(30) Priority: 27.09.2024 EP 24203376; 20.06.2025 PT 2025120354
(71) Applicant: Matglow-Smart Materials Unipessoal Lda, 4430-022 Vila Nova de Gaia (PT)
(72) Inventor: Duarte Mendes, Paulo Jorge, 4430-022 Vila Nova de Gaia (PT); de Oliveira Neves Gomes da Silva, Pedro Daniel, 4430-357 Vila Nova de Gaia (PT); Ben Sedrine, Nabiha, 3800-012 Aveiro (PT)
(74) Representative: Patentree

(57) **Abstract**

It is described a modular chassis for a velocipede type Electric Power Assisted Cycle, EPAC, vehicle, wherein the chassis comprises: one or more longitudinal beams forming a main chassis; two or more wheel modules detachably mounted on the one or more longitudinal beams, each comprising a wheel suspension and a wheel hub for attaching to a wheel; a battery for capturing, storing and supplying energy; wherein at least one of the wheel modules comprises an electric motor; wherein at least one of the wheel modules comprises wheel steering; wherein the battery is electrically connected to the motor or motors.

## Description

### TECHNICAL FIELD

The present disclosure concerns a modular chassis, also referred to, in this document, as a platform, for velocipede type EPAC (Electrically Power-Assisted Cycles) vehicles, comprising: one or more longitudinal frame beams, in particular rails; two or more wheel modules seated on one or more longitudinal frame beams, each comprising a sub-chassis, wheel suspension, motor, steering and a wheel hub; a pedal system connected to a battery and/or motor; a battery connected to the motor, for capturing, storing and using energy; wherein at least one of the wheel modules comprises an electric motor; wherein at least one of the wheel modules comprises steering.

### BACKGROUND

This disclosure concerns a universal, multifunctional and modular platform for EPAC (Electrically Power-Assisted Cycles) vehicles, incorporating interfaces for renewable energy capture systems for smooth and sustainable mobility. This disclosure is an innovative approach to smart cities with zero energy emissions to solve the last mile of logistics, personal/public transport commuting and other urban mobility services.

Transport means play a very important role as they make it possible to connect the most distant residential areas and the central areas with the greatest concentration of economic activities, giving rise to new population flows called commuting movements. This phenomenon is also accompanied by the need to supply peripheral areas, to the same extent as the cities, with goods and services coming from rural areas or production centers, further driven by e-commerce with so-called home deliveries or last mile deliveries.

Urban mobility is therefore a crucial issue for the quality of life in the cities of the future. Solutions aimed at micro mobility face a new paradigm that will definitively affect the way persons and goods move. Public space planning is umbilically linked to safety, socialization, urban and industrial development. Despite being highly massified, forecasts point to even greater growth in the coming years, particularly in countries that have high rates of economic growth.

Although only 3% of the world's territory is covered by cities, the truth is that they represent 75% of carbon emissions. The World Health Organization (WHO) warns about the risks related to poor air quality: in 2016, around 4.2 million premature deaths were associated with air pollution; in 2021, it updated its guidelines by decreasing by half the acceptable concentration of fine particles (PM2. 5), which went from 10 to 5 micrograms per cubic meter. The population exponential increase per area in large urban centers increases pressure on the revision of urban planning, the success of sustainable mobility technologies and the efficient use of urban transport.

Transport accounts for 25% of EU greenhouse gas emissions, while emissions have decreased significantly in other sectors, transport emissions have increased in recent years. It is crucial to make passenger and freight transport in Europe more efficient and less dependent on fossil fuels.

BR 112016023808-7 B1 discloses a vehicle comprising: - a chassis including a front crossmember and a rear crossmember; - a nacelle receiving a person or a load, mounted pivoting relative to the central part of the crossmember about a substantially longitudinal articulation axis, the center of gravity of the nacelle being located beneath said articulation axis; - a front axle and a rear axle each comprising two movement supports for moving on the ground, each movement support being connected to the end part of the corresponding crossmember by a link system; the crossmembers, located in the top part of the nacelle, being separate parts linked to each other only by the nacelle, via the articulation axis, so as to be able to pivot about the articulation axis independently of one other.

GB2624321A discloses a vehicle corner module (VCM) provided for regulating motion of a host vehicle which comprises a vehicle-onboard vehicle-controller. The VCM comprises a sub-frame mountable to a reference frame of the host vehicle; a wheel-hub assembly; VCM-sub-systems mediating between the sub-frame and the wheel-hub assembly, e.g., a drive subsystem, a steering subsystem, a suspension subsystem and/or a braking subsystem. A VCM-onboard VCM-controller, comprises stored program instructions that, when executed by its processors, cause the establishment of a communication link with the vehicle-controller, including electronically transferring information about the VCM from the VCM-controller to the vehicle-controller, and to perform, in response to an installation of the VCM on a vehicle, a post-installation validation-process that includes validating the VCM-subsystems and communicating a result to the vehicle-controller. Offline test apparatus for the VCM is also provided. The invention addresses integration, servicing and testing for use with modular axle-less arrangements.

US11608115 discloses a chassis platform module for an electric vehicle, which may include: a frame part having a battery mounted thereon; a first support part extended from one side of the frame part in a longitudinal direction, and having a front wheel chassis module mounted thereon; and a second support part extended from the other side of the frame part in the longitudinal direction, and having a rear wheel chassis module mounted thereon.

US11465699 discloses vehicle corner modules (VCMs) connectable to a VCM connection interface of a reference - frame of a vehicle plat form, for regulating motion of a vehicle. When a wheel is mounted on a wheel - hub assembly of the VCM, a vehicle connection interface of the VCM is disposed within a cylindrical footprint of the wheel. At least one of the at least one subsystem of the VCM is accommodated between the wheel - hub assembly and the vehicle - connection interface. Vehicle platforms are connectable to the VCMs. The connection of the vehicle platform to the VCM may include connection of subsystems of the VCM to electronic or flow subsystems mounted on the vehicle platform by connection of two portions of a multi - interface connection - element.

These facts are disclosed in order to illustrate the technical problem addressed by the present disclosure.

### GENERAL DESCRIPTION

The present disclosure concerns a modular chassis, also referred to, in this document, as a platform, for velocipede type EPAC (Electrically Power-Assisted Cycles) vehicles, comprising: one or more longitudinal frame beams, in particular rails; two or more wheel modules seated on one or more longitudinal frame beams, each comprising a sub-chassis, wheel suspension, motor, steering and a wheel hub; a pedal system connected to a battery and/or motor; a battery connected to the motor, for capturing, storing and using energy; wherein at least one of the wheel modules comprises an electric motor; wherein at least one of the wheel modules comprises steering.

The listed background does not allow flexibility for the driver's position in the total area of the chassis, is not adapted to pedal-assisted, feet or hands (adaptability for drivers with reduced mobility), human locomotion, do not use the same wheel module in 2 or more corners of the platform, and do not provide a universal solution of using the same platform in multiple segments and types of vehicles for different manufacturers.

The present disclosure provides a universal platform (skateboard platform, i.e., a modular chassis) for new design exercises in a modular and customizable space, with unlimited possibilities, to meet the different needs of society - be it a taxi, a mobile sales vehicle, a cargo, service or simply leisure vehicle, meeting the need for individual and collective, private or public mobility.

Some of the objectives of this disclosure are to ensure that the universal and multifunctional platform may be used by different manufacturers of assisted electric vehicles for multiple applications of cargo transport, individual and collective transport of persons, regardless of location and origin or gender of its users.

Some of the main technical characteristics enabling the universality of the platform are, for example, its classification as a platform for EPAC vehicles, being legally equivalent to bicycles, and can therefore be used by anyone without a driver's license and can also be used in bike lanes, bus lanes, or similar. The development considered the manufacturing process so that it can be produced by traditional metalworks, regardless of the level of development of the country. The constituent raw materials were also considered, they are conventionally used in construction and are therefore available in any geography, its adaptability of the overall footprint (global xyz measurements) allows use in any environment (urban, rural and off-road), its low cost, the use of easily accessible technology, the user interface and its steering position adaptability (left or right driving position, and forward or backward location) are also factors of universality.

Furthermore, the present disclosure is multifunctional since the platform can be configured with a base (skateboard) on which it is possible to configure any vehicle, whether for commercial, private or community use. Its high flexibility in terms of driver position module (adaptable to different positions on the chassis, ground clearance, variable lengths and widths, ...) its total customization and adaptability (transport of persons, animals and cargos) aided by the existence of universal beams/rails for fixing different components and modules, allowing adaptation to different use cases.

Specific adaptations to the platform can be done to guarantee universal accessibility for the user as a passenger, easy access is possible for the transport of persons with reduced mobility, since the height of the platform is variable to the intended use, and it allows the installation of an access ramp. For a reduced mobility driver, it is possible to install a hand generator, instead of a pedal, as well as using the vehicle up to 6 km/h without the need to pedal as provided by the European legislation in effect at the time of writing.

In one embodiment, the platform may have cargo monitoring systems, blocking its use in case of excess weight, and allowing the management of deliveries in logistics by associating the weight of parcels with recipients, to facilitate a faster registration of deliveries with minimum errors.

The platform may permit the coupling of different types of cargo boxes depending on the use. The platform has universal fixing systems, where it is possible to attach different types of accessories corresponding to fixing different types of cargo boxes, passenger seats, street vending equipment, first aid equipment and SOS assistance, municipal cleaning services, carsharing, and many others.

Ensure a symmetrical wheel module (sub-chassis, motor, suspension, hub, wheel, ...) on the two orthogonal axes to reduce the number of different references, and consequently stocks, simplify and facilitate the assembly, allowing a reduction in costs and greater versatility in changes to the vehicle's dimensions, type, segment, class and motor, as well as in its maintenance and repair.

The wheel module (on the front and/or rear wheel(s)) may comprise the following main elements: a motor, a control system, a transmission system, a suspension system, a wheel, a steering system, brakes and a sub-chassis, mounted to the main chassis through screwed or welded mechanical connections from the sub-chassis to the main chassis.

The different sub-systems (control, suspension, steering, braking and transmission) may be installed on the sub-chassis, and the latter on the main chassis.

The sub-chassis is the structural element that allows the integration of the wheel modules into the main chassis.

The symmetry between wheel modules is provided by the use of the same base plate (sub-chassis), thanks to its flat shape plate, allowing its use from the front or the opposite side. The base plate allows the suspension elements to be mounted in practically any position and adjustable to the desired final dimensions for the vehicle. The different components composing the symmetric modules may be:
identical, thus allowing the same parts to be used in all wheel modules.
mirrored, using the same components and manufacturing processes only with symmetrical assembly.

The symmetry allows reducing the number of different parts needed to produce the vehicle, for which the same part can be used in different locations in the platform, thus reducing the number of different references.

The symmetrical parts, when possible, are manufactured from identical components and with the same processes, only reversing their orientation, this makes it possible to reduce the number of distinct production operations, reduce the different tools needed and reduce the necessary stock of parts for platform manufacturing.

The symmetry facilitates the assembly, since there is a lower number of different components, therefore the assembly process is optimized, considering that such process will be repeated on all wheel modules, using only one type of screw-nut (fastener) to couple it with the main chassis. The use of a single type of screw-nut (fastener) also reduces the number of tools needed to assemble the platform.

The platform is intended for EPAC vehicles. The platform preferably consists of four main components: main chassis, wheel module, control/steering module and impact/collision module.

The development of the modules was carried out with the aim of reducing and/or eliminating compromises of the platform performance. The propulsion and suspension systems were designed to be flexible for different types of vehicles and their corresponding requirements. Particular attention was paid to the use of standardized measurements and volumes for the motor and suspension systems in the industry, to avoid compromise and limitation in the choice of future components and suppliers.

The main objectives of this platform are:
Propose a choice of photovoltaic systems with a guarantee of at least 25% extra autonomy;
Guarantee volume equal or higher than 1.5 m³ and cargo capacity equal or higher than 250kg;
Ensure that the cost of the platform is lower than any customized e-cargo system on the market, and that its maintenance and repair may be carried out by any user or bicycle mechanic anywhere in the world;
Ensure that production may be carried out anywhere in the world in any conventional metalworks with laser cutting, bending and welding;
Ensure that changes are manifested only in the separation of quadrants on orthogonal axes with structural spacers, without the need for new wheel modules.

The "structural spacers" are optionally an integral part of the main chassis and are composed of stringers that form the backbone of the platform. Therefore, depending on the requirements of the vehicle, the dimensions of the frame beams/rails will be adjusted.

The material of the chassis's elements is preferably steel or aluminum alloys, easily accessible and commonly used for the construction of bicycles and automobiles, as they have the necessary characteristics of robustness, fatigue resistance and low weight.

The different dimensions of the platform may influence the dynamic characteristics of the vehicle, such as the curvature radius and the suspension angles. These parameters are determined depending on the vehicle size and application.

The modularity of the platform construction allows easy adaptation of these parameters to the various necessary applications or use cases.

It is possible to adapt this platform to different types of vehicles (persons, cargo, animals). The limitations that may exist refer to EPAC vehicle regulations and other applicable standards, which may restrict their dimensions.

The wheel modules are usually the most complex and expensive parts of a chassis of the kind of vehicle disclosed. Hence modularity and symmetry of the chassis are usually a determining condition for achieving cost reduction. Its change would involve a redesign of the entire chassis as well as changing its mechanical dimensioning. The "structural spacers" are preferably simplified structural components that are low cost and easy to manufacture in any size, without affecting the vehicle's response.

Depending on the dimensions of the platform, the suspension system may be adjusted in its angles, considering the platform's requirements. Regarding the motor, transmission and other subsystems, no change is usually necessary due to the different possible dimensions of the platform. There is no impact on the coordination between the various systems.

Preferably, the vehicle should provide different positions for the driver, right, left, center, front, middle and back, allowing greater versatility in use and adaptation to use cases and world markets.

Preferably, the vehicle should fit within the EPACs category requirements.

The main requirements may be dictated by, for example, the European standard EN 15194:2017+A1:2023, including electrical assistance up to a maximum of 25km/h, walk assist up to 6km/h, with a maximum nominal power of 250W, a bicycle vehicle with human main traction force.

In one embodiment, there is a mode called walk assist, where after activation, the vehicle may reach up to 6km/h without mechanical power from the driver, in accordance with regulation EN 15194:2017+A1:2023.

By means of speed sensors embedded in the motor, the system speed may be measured, and the electrical assistance may be turned off at velocities above 25 km/h.

The platform is preferably designed to be an EPAC (powered cycle), meeting the required specifications. A bicycle may be defined as a vehicle with two or more wheels driven by the driver's own effort using pedals or similar devices.

Similarly, in the vehicle design process it may be necessary to consider the same specifications, so that it is classified as an EPAC. In an EPAC vehicle pedals are used as the main tractor force, with the electric motor only responsible for assisting the driver.

The regulatory parameters of EPACs concern the maximum assisted speed and how this assistance is activated. Electric motor control systems cannot be modified by the end user.

Among the main characteristics of this disclosure, its universality is highlighted, as it may be used by any manufacturer who wants to develop vehicles for light mobility in any part of the 5 continents given its symmetry and ability to change the driver's position, its multifunctionality, whether for individual or collective transport of persons or cargo, its modularity allowing a reduction of the number of different parts, a shorter supply chain, a greater production scalability, a lower production and storage costs, fewer and different parts in assembly, less space on assembly lines, greater ease of maintenance and/or replacement, greater efficiency in shipping and transportation.

This disclosure permits a lower cost solution for B2C manufacturers, instead of the high cost of a solution developed in house. The platform's communication system allows connectivity with the user, the manufacturer and infrastructures when available, ensuring constant feedback to evolve the platform and guarantee comfort, reliability and safety for the user in its use, and in generation of warnings and alerts. The platform will include an interface between regenerative energy capture systems and charging, control and solar integration systems for better use of available resources, as well as reducing the vehicle's total mass and increasing autonomy. Allowing the use of these vehicles in territories with scarce energy resources where charging electric vehicles would render them unsuitable for use, thus reducing dependence on fossil fuel vehicles, typically seen as the only option in these locations.

The present disclosure concerns a modular chassis, also referred to, in this document, as a platform, for velocipede type EPAC (Electrically Power-Assisted Cycles) vehicles, comprising: one or more longitudinal frame beams, in particular rails; two or more wheel modules seated on one or more longitudinal frame beams, each comprising a sub-chassis, wheel suspension, motor, steering and a wheel hub; a pedal system connected to a battery and/or motor; a battery connected to the motor, for capturing, storing and using energy; wherein at least one of the wheel modules comprises an electric motor; wherein at least one of the wheel modules comprises steering.

### BRIEF DESCRIPTION OF THE DRAWINGS

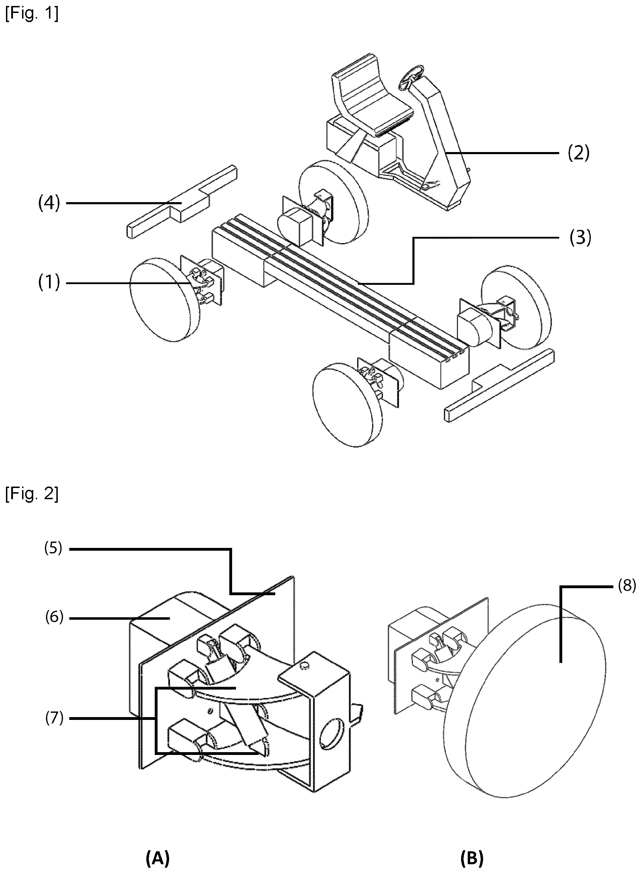

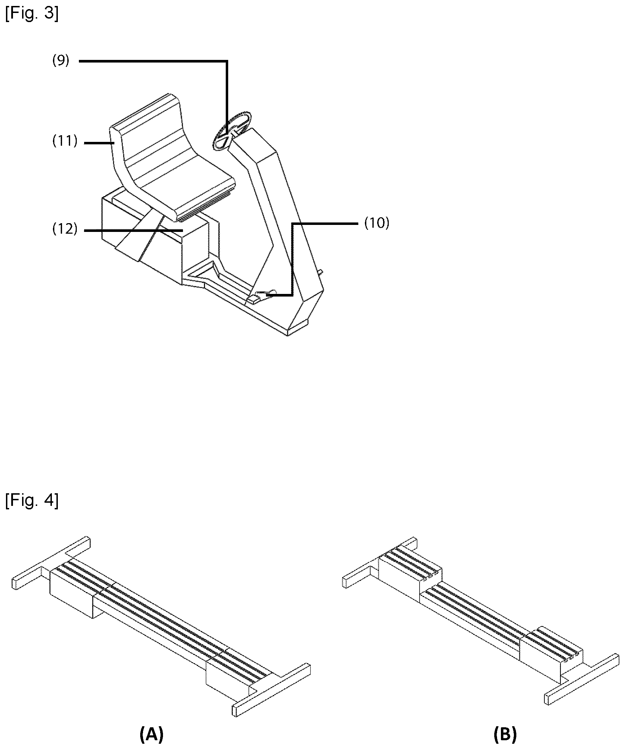

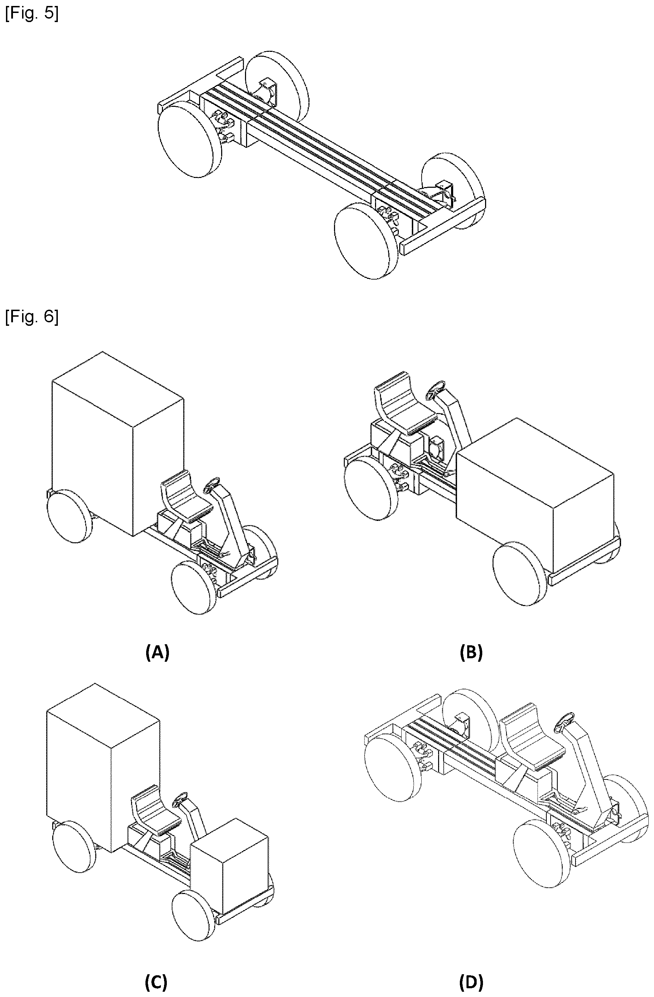

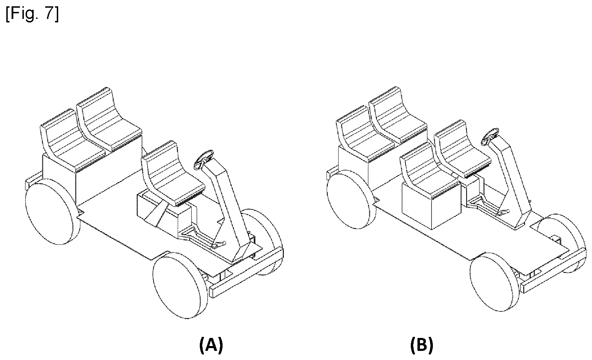

The following figures provide preferred embodiments for illustrating the disclosure and should not be seen as limiting the scope of invention. The drawings included are as follows.
Exploded representation of an embodiment of the modular platform or modular chassis (**Fig. 1**).
Representation of a vehicle wheel module without attached wheel (A) with attached wheel (B) (**Fig. 2**).
Representation of an embodiment of the control/steering module of the present embodiment (**Fig. 3**).
Representation of an embodiment of the main chassis with different ground heights achieved by installing the modular subsystem on the upper level (A) or the modular subsystem on the lower level (B) (**Fig. 4**).
Representation of an implementation of the main chassis with 4-wheel modules (**Fig. 5**).
Representation of a platform embodiment with/without cargo box and control/steering module in different positions on the modular chassis. Rear cargo box and front control/steering module (A); Front cargo box and rear control/steering module (B); Front and rear cargo box and central control/steering module (C); Modular chassis or platform without attached cargo module (D) (**Fig. 6**).
Representation of a platform embodiment with a floor for person transport: 3 seats and control/steering module in the central and forward position of the platform (A); 4 seats and control/steering module in the left and central position of the platform (B) (**Fig. 7**).

### DETAILED DESCRIPTION

The present disclosure may comprise, as illustrated in **Figure 1****,** wheel modules **1;** a control/steering module (mobile cockpit) **2;** a main chassis of orthogonal and longitudinal symmetry **3** and front and rear impact/collision absorption modules **4.**

The wheel module illustrated in **Figure 2** is a subsystem installed on a sub-chassis base plate metal element **5** comprising: a motor group **6,** a controller, a transmission system, a suspension system **7,** wheel **8** and brake. The installation of this sub-chassis in a base plate metal element on the main chassis may be through screwed mechanical connections and its elements are repeated depending on the intended vehicle type.

The control/steering module, illustrated in **Figure 3****,** also called mobile cockpit, is a modular, autonomous and structural subsystem that may be comprised of a steering wheel or handlebars **9,** steering column, an analysis and operation control monitor, controller, generator and pedals **10,** adjustable and folding driver's seat **11,** removable secondary battery **12,** document holder, cup holder, etc. The mobile cockpit may be integrated in any position on the platform, at the front, in the longitudinal middle or at the rear, on the left, in the transversal middle or on the right, which allows using the platform in any country and guarantees total freedom to vehicle designers.

The orthogonal symmetry of the main chassis, shown in **Figure 4****,** is a modular and structural subsystem that performs the function of a backbone comprised of parallel frame beams/rails and two opposing blocks where all subsystems and bodies or subsequent functional systems will be coupled. Both opposing blocks define the position between axles and the width of the vehicle, meaning their positioning with respect to the orthogonal axes of symmetry is subject to variation. **Figure 4 (A)** is a representation of the main chassis and impact/collision absorption module in the upper position; **Figure 4 (B)** is a representation of the main chassis and impact/collision absorption module in the lower position.

The impact/collision absorption module **4** shown in **Figure 1** is a structural subsystem that performs the function of high impact absorption of the forces resulting from the impact or collision, front or rear, thus increasing the safety of occupant (persons, animals) and cargo.

The seat **11,** shown in **Figure 3** allows the driver to quickly turn left and right and be in an ergonomic position to pedal (using the pedals **10**) and steer (using the steering wheel or handlebars **9**).

The battery **12,** shown in **Figure 3****,** is connected to the generator and pedals **10** and it is possible to remove the battery to charge externally, activating a rotation or translation mechanism of seat **11.**

The elements (**9** to **12**) are coupled together through the control/steering module **2,** which is subsequently coupled to the main chassis **3.**

Additional components may be added to the control/steering module **2** such as: cup holders, screens of different sizes and other supports, sensors, etc, because the module was developed considering its application to different types of vehicles and usage situations already listed.

**Figure 5** shows a realization of the main chassis assembly **3** with 4 wheel modules **1** and front and rear impact/collision absorption modules **4.**

**Figure 6** shows example configurations of a platform embodiment with/without cargo box and control/steering module in different positions on the modular chassis. Rear cargo box and front control/steering module (A); Front cargo box and rear control/steering module (B); Front and rear cargo box and central control/steering module (C); Modular chassis or platform without attached cargo module (D).

**Figure 7** shows examples of configurations for person transport with a floor: 3 seats and control/steering module in the central and forward position of the platform (A); 4 seats and control/steering module in the left and central position of the platform (B).

The platform is characterized by:
Wheel module, whose symmetry comprises two orthogonal axes. The respective orthogonal axes are expandable to meet multifunctionality and adaptability for different customizations, segments and types of bicycles. In addition to these requirements, it guarantees a smaller number of different parts, and an optimization of the production process and respective supply chain focused on the ability to scale the solution.
High efficiency and performance suspension system that guarantees the versatility and functionality of bicycles in their different types and segments, maintaining the comfort and safety of persons, animals and goods, in a curve, when accelerating or braking.
Optimized geometry to guarantee the best relationship between the center of mass and the center of rotation for maximum speed and radius of rotation usage limits.
Platform design adapted to different segments and types, absorbing multiple markets, whether commercial, cargo, passenger transport, individual or family transport.
Recyclable materials with a processing low carbon footprint, accessible on the national and/or global market, low cost and low usury.
Modularity of the system, which allows the management of the functionalities integrated into the platform according to the needs, both initially and throughout the useful life of the platform, enabling its adjustment, expansion and change of typology/segment in an accessible way.

The platform was developed based on a residual need for preventive maintenance, which can be carried out by users. The corrective maintenance should be limited to the easy and accessible replacement of the different damaged modules.

Ensuring that vehicles using the platform can be used by drivers without a driver's license in compliance with applicable regulations.

Connectivity to ensure the best user experience, improving user safety and comfort such as: accident detection, real-time geolocation, predictive maintenance forecast, statistics on vehicle use, suspicious movement notification and IOT system.

In one embodiment, the modular chassis may further comprise a control/steering module, movable relative to the one or more longitudinal frame beams/rails, comprising a seat coupled to a pedal system connected to the battery and the motor, in particular the pedal system may comprise an electrical generator.

In one embodiment, the pedal system may be configured to allow the user to operate the pedals while remaining seated on the seat, using feet or hands.

In one embodiment, the seat may have a compartment to store the battery, allowing access for mounting and removing the battery.

In one embodiment, each of the wheel modules comprises a plate to which the respective wheel suspension is attached, as well as optional motor and steering, and to which the plate is supported on the main chassis.

In one embodiment, the plate may be interchangeable between said wheel modules, by rotation around a vertical axis of the vehicle and/or by translation.

In one embodiment, the pedal system can be configured to convert mechanical energy generated by the movement of the pedals into electrical energy and/or traction force.

In one embodiment, the control/steering module may comprise a steering wheel, handlebars or directional pedal system, in adapted mobility, for controlling the direction of the wheel modules and mechanical or electrical connections connected to the steering of the wheels.

In one embodiment, one or more longitudinal frame beams may be rails which may have an elongated body configured to support the sliding of objects along its length.

In one embodiment, the longitudinal frame rails may comprise one or more cross sections along their length, and the steering wheel modules comprise coupling elements configured to slide on the cross sections of the longitudinal frame rails.

In one embodiment, longitudinal frame rails may comprise rails or recesses for sliding and securing objects along their length.

In one embodiment, the control/steering module may comprise coupling elements configured to slide in the rails or recesses of the longitudinal frame rails.

In one embodiment, the battery is a secondary (rechargeable) battery, configured to be removable and interchangeable.

In one embodiment, the battery may comprise a power output interface configured to allow connection of external devices for charging or powering through energy generated by the pedal and/or the battery and/or other sustainable energy sources.

This disclosure also refers to Electric Power -Assisted Cycles, EPAC, comprising a modular chassis as described.

The described embodiments are combinable with each other. The present invention is, of course, in no way restricted to the embodiments described in this document and a person with average knowledge of the area can foresee many other possibilities for using it, depending on the requirements of each situation, as defined in the attached claims. The following claims define additional embodiments of the present disclosure.

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

Notably, the figures and examples above are not meant to limit the scope of the present disclosure to a single implementation, as other implementations are possible by way of interchange of some or all the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present specification, an implementation showing a singular component should not necessarily be limited to other implementations including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

The foregoing description of the specific implementations will so fully reveal the general nature of the disclosure that others can, by applying knowledge within the skill of the relevant art(s), readily modify and/or adapt for various applications such specific implementations, without undue experimentation, without departing from the general concept of the present disclosure. Such adaptations and modifications are therefore intended to be within the meaning and range of equivalents of the disclosed implementations, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance presented herein, in combination with the knowledge of one skilled in the relevant art(s). It is to be understood that dimensions discussed or shown are drawings accordingly to one example and other dimensions can be used without departing from the disclosure.

Furthermore, it is to be understood that the invention encompasses all variations, combinations, and permutations in which one or more limitations, elements, clauses, descriptive terms, etc., from one or more of the claims or from relevant portions of the description is introduced into another claim. For example, any claim that is dependent on another claim can be modified to include one or more limitations found in any other claim that is dependent on the same base claim.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

## Claims

1. Modular chassis for a velocipede type Electric Power Assisted Cycle, EPAC, vehicle, wherein the chassis comprises:
one or more longitudinal beams forming a main chassis;
two or more wheel modules detachably mounted on the one or more longitudinal beams, each comprising a wheel suspension and a wheel hub for attaching to a wheel;
a battery for capturing, storing and supplying energy;
wherein at least one of the wheel modules comprises an electric motor;
wherein at least one of the wheel modules comprises wheel steering;
wherein the battery is electrically connected to the motor or motors.

2. Modular chassis according to the preceding claim further comprising a steering pedal module comprising a steering user interface, wherein the steering pedal module is displaceable in respect of the one or more longitudinal beams and comprises one or more pedals for driving the wheels or for driving an electrical generator for powering the motor or motors.

3. Modular chassis according to the preceding claim wherein the steering pedal module comprises the electrical generator electrically connected to the motor or motors.

4. Modular chassis according to claim 2 or 3 wherein the steering pedal module comprises a mechanical linkage between one or more pedals and one or more wheels.

5. Modular chassis according to any of claims 2 - 4 wherein the steering pedal module comprises a steering wheel, handlebar or directional pedals, for steering one or more of the wheel modules, and a mechanical, hydraulic or electric connection for steering one or more wheels.

6. Modular chassis according to any of the previous claims comprising three or more wheel modules detachably mounted on the one or more longitudinal beams, each wheel module comprising wheel suspension and a wheel hub for attaching to a wheel.

7. Modular chassis according to any of the previous claims comprising a seat displaceable in respect of the one or more longitudinal beams, in particular the one or more longitudinal beams are longitudinal rails, further in particular wherein the seat is mounted on the steering pedal module and the seat is displaceable in respect of the one or more longitudinal beams together with the steering pedal module.

8. Modular chassis according to any of the previous claims wherein the seat comprises a compartment for receiving the battery, in particular a compartment allowing access for installation and removal of the battery, further in particular wherein the compartment is arranged under the seat.

9. Modular chassis according to any of the previous claims wherein the battery is detachable, in particular the battery is a rechargeable battery configured to be removable and interchangeable.

10. Modular chassis according to any one of the preceding claims wherein each of the wheel modules comprises a plate, as a sub-chassis, to which the respective wheel suspension is coupled, as well as an optional motor and wheel steering, and the plate is detachably mounted on the one or more longitudinal beams.

11. Modular chassis according to the preceding claim wherein the plate is interchangeable between said wheel modules, by rotation around a vertical axis of the vehicle and/or by translation, in particular by translation.

12. Modular chassis according to any one of the preceding claims wherein one or more longitudinal beams are rails that have an elongated body configured to support the slidable mounting of objects along a length of the one or more longitudinal beams, or the modular chassis comprises a platform mounted on the one or more longitudinal beams configured to support the displaceable mounting of objects on said platform, in particular wherein the longitudinal beams comprise two or more longitudinal beams and one or more transversal beams joining the two or more longitudinal beams, wherein the one or more transversal beams slide and fit into a transversal cross-section of the longitudinal beams, in particular said objects comprise one or more of said vehicle modules.

13. Modular chassis according to any one of the preceding claims wherein one or more longitudinal beams comprise a rail or recess for sliding and securing objects along a length of the one or more longitudinal beams, in particular wherein the steering pedal module comprises one or more coupling elements configured to slide in the rail or recess of the longitudinal beams, in particular said objects comprise one or more of said vehicle modules.

14. Modular chassis according to any one of the preceding claims wherein the battery comprises a power output interface for connecting external devices for charging or powering the chassis by energy generated by the pedal and/or the battery and/or other sustainable energy sources.

15. Electric Power-Assisted Cycle, EPAC, vehicle comprising a modular chassis according to any one of claims 1 - 14.
